# EUROPEAN PATENT APPLICATION

(11) **EP 1 198 076 A1**
(43) Date of publication of application: **17.04.2002**
(21) Application number: 00122013.6
(22) Date of filing: 10.10.2000
(51) Int. Cl.: H04B 7/005

(54) **Method and apparatus for the initiation of communication**

(71) Applicant: SIEMENS AKTIENGESELLSCHAFT, 80333 München (DE)
(72) Inventor: Raaf, Bernhard, 81475 München (DE)

(57) **Abstract**

Power settings of retransmissions of initial transmissions are optimised taking into account constraints imposed by maximum and minimum available power levels.

## Description

The present invention relates to a method and an apparatus for the inititation of communication. More specifically, this invention describes the initiation of a connection. This initiation is typically started by the Mobile station (also called User Equipment UE) by transmitting an initial signal to the Base station (also called Node B). This initial signal can either be a so called RACH (Random Access) message or a preamble only i.e. a specific signal sent prior to a (possible) RACH message transmission. In CDMA systems (e.g. the UMTS system, but also other systems) power control is a very important issue. However, for the initial RACH transmission, closed loop power control as used for ordinary data channels cannot be set up in advance. Therefore so called open loop power control is used. Because the latter cannot determine the ideal uplink power with high accuracy, additionally a power ramping procedure is used, were successive RACH preambles are transmitted and each repetition is sent with more power than the previous one. If the power of the initial transmission is inadequate due to insufficient power and is thus not received by the base station, the base station will not acknowledge it an a next transmission with higher power will be transmitted. Eventually the correct power will be selected, and then there is a good chance that the message will be heard by the base station.

This procedure is specified for example in the Technical Specification 25.214, chapter 6 Random access procedure. The latest available draft, dated 11.sept.2000, is:
3G TS 25.214 V3.4.0-DRAFT (2000-09)
Technical Specification
3rd Generation Partnership Project;
Technical Specification Group Radio Access Network;
Physical layer procedures (FDD)
(Release 1999)
Postal address
3GPP support office address
650 Route des Lucioles - Sophia Antipolis
Valbonne - FRANCE

This chapter is cited here

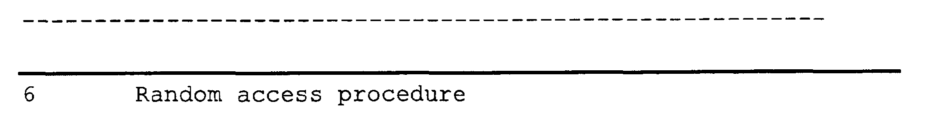

### .1 6.1 Physical random access procedure

The physical random access procedure described in this subclause is initiated upon request of a PHY-Data-REQ primitive from the MAC sublayer (cf. [9]).
Before the physical random-access procedure can be initiated, Layer 1 shall receive the following information from the higher layers (RRC):
- The preamble scrambling code.
- The message length in time, either 10 or 20 ms.
- The AICH_Transmission_Timing parameter [0 or 1].
- The available signatures and RACH sub-channel groups for each Access Service Class (ASC), where a sub-channel group is defined as a group of some of the sub-channels defined in subclause 6.1.1.
- The power-ramping factor Power_Ramp_Step [integer > 0].
- The parameter Preamble_Retrans_Max [integer > 0].
- The initial preamble power Preamble_Initial_Power.
- The power offset ΔPₚ₋ₘ = P_{message-control} - P_{preamble}, measured in dB, between the power of the last transmitted preamble and the control part of the random-access message.
- The set of Transport Format parameters. This includes the power offset between the data part and the control part of the random-access mesagee for each Transport Format.

Note that the above parameters may be updated from higher layers before each physical random access procedure is initiated.
At each initiation of the physical random access procedure, Layer 1 shall receive the following information from the higher layers (MAC):
- The Transport Format to be used for the PRACH message part.
- The ASC of the PRACH transmission.
- The data to be transmitted (Transport Block Set).

The physical random-access procedure shall be performed as follows:
1 Randomly select the RACH sub-channel group from the available ones for the given ASC. The random function shall be such that each of the allowed selections is chosen with equal probability.
2 Derive the available uplink access slots, in the next full access slot set, for the selected RACH sub-channel group with the help of subclauses 6.1.1. and 6.1.2. If there is no access slot available in the selected set, randomly select one uplink access slot corresponding to the selected RACH sub-channel group from the next access slot set. The random function shall be such that each of the allowed selections is chosen with equal probability.
3 Randomly select a signature from the available signatures for the given ASC. The random function shall be such that each of the allowed selections is chosen with equal probability.
4 Set the Preamble Retransmission Counter to Preamble_Retrans_Max.
5 Set the preamble transmission power to Preamble_Initial_Power.
6 Transmit a preamble using the selected uplink access slot, signature, and preamble transmission power.
7 If no positive or negative acquisition indicator (AI ≠ +1 nor -1) corresponding to the selected signature is detected in the downlink access slot corresponding to the selected uplink access slot:
   7.1 Select the next available access slot in the RACH sub-channel group chosen in 1.
   7.2 Randomly selects a new signature from the available signatures within the given ASC. The random function shall be such that each of the allowed selections is chosen with equal probability.
   7.3 Increase the preamble transmission power by ΔP₀ = Power_Ramp_Step [dB].
   7.4 Decrease the Preamble Retransmission Counter by one.
   7.5 If the Preamble Retransmission Counter > 0 then repeat from step 6. Otherwise pass L1 status ("No ack on AICH") to the higher layers (MAC) and exit the physical random access procedure.
8 If a negative acquisition indicator corresponding to the selected signature is detected in the downlink access slot corresponding to the selected uplink access slot, pass L1 status ("Nack on AICH received") to the higher layers (MAC) and exit the physical random access procedure.
9 Transmit the random access message three or four uplink access slots after the uplink access slot of the last transmitted preamble depending on the AICH transmission timing parameter. Transmission power of the control part of the random access message should be ΔPₚ₋ₘ [dB] higher than the power of the last transmitted preamble. Transmission power of the data part of the random access message is set according to subclause 5.1.1.2.
10 Pass L1 status "RACH message transmitted" to the higher layers and exit the physical random access procedure.

### .1.1 6.1.1 RACH sub-channels

A RACH sub-channel defines a sub-set of the total set of uplink access slots. There are a total of 12 RACH sub-channels. RACH sub-channel #i (i = 0, ..., 11) consists of the following uplink access slots:
- Uplink access slot #i leading by τₚ₋ₐ chips the downlink access slot #i contained within the 10 ms interval that is time aligned with P-CCPCH frames for which SFN mod 8 = 0 or SFN mod 8 = 1.
- Every 12^{th} access slot relative to this access slot.

The access slots of different RACH sub-channels are also illustrated in Table 7.

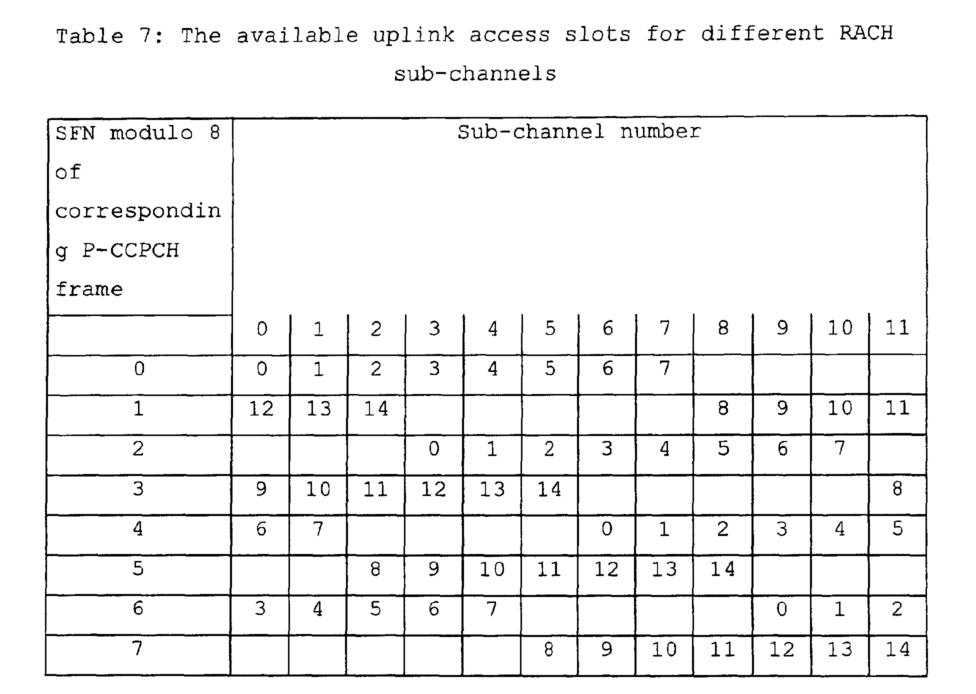

### .1.2 6.1.2 RACH access slot sets

The PRACH contains two sets of access slots as shown in Figure 2. Access slot set 1 contains PRACH slots 0 - 7 and starts τₚ₋ₐ chips before the downlink P-CCPCH frame for which SFN mod 2 = 0. Access slot set 2 contains PRACH slots 8 - 14 and starts (τₚ₋ₐ -2560) chips before the downlink P-CCPCH frame for which SFN mod 2 = 1.

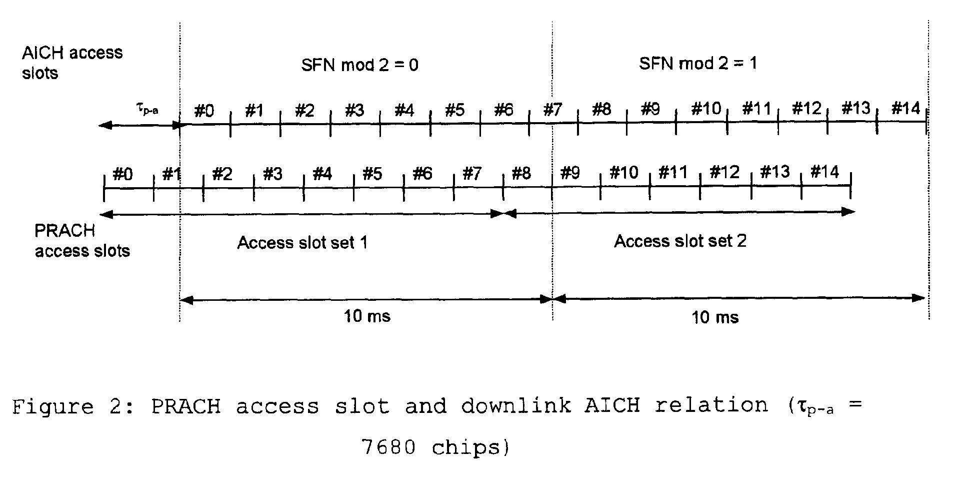

### .2 6.2 CPCH Access Procedures

For each CPCH physical channel in a CPCH set allocated to a cell the following physical layer parameters are included in the System Information message: L1 shall receive the following information from the higher layers (RRC).
- UL Access Preamble (AP) scrambling code.
- UL Access Preamble signature set.
- The Access preamble slot sub-channels group.
- AP- AICH preamble channelization code.
- UL Collision Detection(CD) preamble scrambling code.
- CD Preamble signature set.
- CD preamble slot sub-channels group.
- CD-AICH preamble channelization code.
- CPCH UL scrambling code.
- DPCCH DL channelization code. ([512] chip).

- NOTE:: There may be some overlap between the AP signature set and CD signature set if they correspond to the same scrambling code.

The following physical layer parameters are received from the RRC layer:
1) N_AP_retrans_max = Maximum Number of allowed consecutive access attempts (retransmitted preambles) if there is no AICH response. This is a CPCH parameter and is equivalent to Preamble_Retrans_Max in RACH.
2) P _{RACH} = P _{CPCH} = Initial open loop power level for the first CPCH access preamble sent by the UE.
   - [RACH/CPCH parameter].
3) ΔP₀ = Power step size for each successive CPCH access preamble.
   - [RACH/CPCH parameter].
4) ΔP₁ = Power step size for each successive RACH/CPCH access preamble in case of negative AICH. A timer is set upon receipt of a negative AICH. This timer is used to determine the period after receipt of a negative AICH when ΔP₁ is used in place of ΔP₀.
   - [RACH/CPCH parameter].
5) ΔPₚ₋ₘ = P_{message-control} - P_{cd}, measured in dB. This is the power offset between the transmit power of the CD preamble and the initial transmit power of the CPCH power control preamble (or the control part of the CPCH message part if the power control preamble length is 0 slots).
   [CPCH parameter]
6) T_{cpch} = CPCH transmission timing parameter: This parameter is identical to PRACH/AICH transmission timing parameter.
   - [RACH/CPCH parameter].
7) L_{pc-preamble} = Length of power control preamble (0 or 8 slots).
   - [CPCH parameter].
8) N_{Start_Message} = Number of frames for the transmission of Start of Message Indicator in DL-DPCCH for CPCH.
9) The set of Transport Format parameters. This includes a Transport Format to PCPCH mapping table.

L1 shall receive the following information from MAC prior to packet transmission:
1) Transport Format of the message part.
2) The data to be transmitted is delivered to L1 once every TTI until the data buffer is empty.

The overall CPCH -access procedure consists of two parts:
1) Upon receipt of a Status-REQ message from the MAC layer, the UE shall start monitoring the CSICH to determine the availability of the transport formats in the transport format subset included in the Status-REQ message. UTRAN transmits availability of each PCPCH or maximum available data rate with availability of each PCPCH over the CSICH in case CA is active. Upper layers will supply the UE with information to map the transport formats to the PCPCHs. The UE shall send a Status-CNF message to the MAC layer containing the transport format subset listing the transport formats of the requested subset which are currently indicated as "available". The actual access procedure is then:
2) Upon receipt of the Access-REQ message from the MAC layer, which contains an identified transport format from the available ones ,the following sequence of events occur. The use of step 2a or 2b depends on whether availability of each PCPCH or the Maximum available data rate along with the availability of each PCPCH is transmitted over CSICH. Note that in the first case, each access resource combination (AP signatures and access subchannel group) maps to each PCPCH resource and in the second case each access resource combination maps to each data rate.
2a) (In case CA is not Active) The UE shall test the value(s) of the most recent transmission of the CSICH Status Indicator(s) corresponding to the PCPCH channel(s) for the identified transport format included in the Access-REQ message. If this indicates that no channel is 'available' the UE shall abort the access attempt and send a failure message to the MAC layer. The UE shall also retain the availability status of the each PCPCH for further verification in a later phase.
2b) (In case CA is active) The CSICH Status Indicators indicate the maximum available data rate along with individual PCPCH availability. The UE shall test the value of the most recent transmission of the Status Indicator(s). If this indicates that the maximum available data rate is less than the requested data rate, the UE shall abort the access attempt and send a failure message to the MAC layer. The PHY provides the availability information to the MAC. The UE shall also retain the availability status of the each PCPCH for further channel assignment message verification in a later phase in case of success.
3) The UE sets the preamble transmit power to the value P_{CPCH_} which is supplied by the MAC layer for initial power level for this CPCH access attempt.
4) The UE sets the AP Retransmission Counter to N_AP_Retrans_Max.
5a) In the case CA is not active, the uplink access slot and signature to be used for the CPCH-AP transmission are selected in the following steps:
   a) The UE selects randomly one PCPCH from the set of available PCPCH channel(s) as indicated on the CSICH and supporting the identified transport format included in the Access-REQ message. The random function shall be such that each of the allowed selections is chosen with equal probability.
   b) The UE randomly selects a CPCH-AP signature from the set of available signatures in the access resource combination corresponding to the selected PCPCH in step a). The random function shall be such that each of the allowed selections is chosen with equal probability.
   c) Using the AP access slot sub-channel group of the access resource combination corresponding to selected PCPCH in step a), the UE derives the available CPCH-AP access slots with the help of subclauses 6.1.1. and 6.1.2. If there is no access slot available in the selected set, the UE randomly selects one uplink access slot corresponding to the selected CPCH sub-channel group from the next access slot set. The random function shall be such that each of the allowed selections is chosen with equal probability.
5b) In the case CA is active, the uplink access slot and signature to be used for the CPCH-AP transmission are selected in the following steps:
   a) The UE randomly selects a CPCH-AP signature from the set of available signatures in the access resource combination corresponding to the transport format identified in the Access-REQ message. The random function shall be such that each of the allowed selections is chosen with equal probability.
   b) Using the AP access slot sub-channel group of the access resource combination corresponding to the transport format identified in the Access-REQ message, the UE derives the available CPCH-AP access slots with the help of subclauses 6.1.1 and 6.1.2. If there is no access slot available in the selected set, the UE randomly selects one uplink access slot corresponding to the selected CPCH sub-channel group from the next access slot set. The random function shall be such that each of the allowed selections is chosen with equal probability.
6) The UE transmits the AP using the selected uplink access slot and signature, and MAC supplied initial preamble transmission power. The following sequence of events occur based on whether availability of each PCPCH or the Maximum available data rate along with the availability of each PCPCH is transmitted over CSICH.
6a) (In case CA is not Active) The UE shall test the value of the most recent transmission of the Status Indicator corresponding to the identified CPCH transport channel immediately before AP transmission. If this indicates that the channel is 'not available' the UE shall abort the access attempt and send a failure message to the MAC layer. Otherwise the UE transmits the AP using the UE selected uplink signature and access slot, and the initial preamble transmission power from step 3, above.
6b) (In case CA is active) The Status Indicator indicates the maximum available data rate as well as the availability of each PCPCH. The UE shall test the value of the Status Indicator. If this indicates that the maximum available data rate is less than the requested data rate, the UE shall abort the access attempt and send a failure message to the MAC layer. Otherwise the UE shall transmit the AP using the UE selected uplink access slot, the MAC supplied signature and initial preamble transmission power from step 3, above.
7) If the UE does not detect the positive or negative acquisition indicator corresponding to the selected signature in the downlink access slot corresponding to the selected uplink access slot, the UE shall test the value of the most recent transmission of the Status Indicator corresponding to the selected PCPCH immediately before AP transmission. If this indicates that the PCPCH is 'not available' the UE shall abort the access attempt and send a failure message to the MAC layer. Otherwise the following steps shall be executed:
   a) Select the next available access slot in the sub-channel group used. There must be a minimum distance of three or four (per Tcpch parameter) access slots from the uplink access slot in which the last preamble was transmitted depending on the CPCH/AICH transmission timing parameter.
   b) Increases the preamble transmission power with the specified offset ΔP. Power offset ΔP₀ s is used unless the negative AICH timer is running, in which case ΔP₁ is used instead.
   c) Decrease the AP Retransmission Counter by one.
   d) If the AP Retransmission Counter < 0, the UE aborts the access attempt and sends a failure message to the MAC layer.
8) If the UE detects the AP-AICH_nak (negative acquisition indicator) corresponding to the selected signature in the downlink access slot corresponding to the selected uplink access slot, the UE aborts the access attempt and sends a failure message to the MAC layer. The UE sets the negative AICH timer to indicate use of ΔP₁ use as the preamble power offset until timer expiry.
9) Upon reception of AP-AICH_ack with matching signature, the access segment ends and the contention resolution segment begins. In this segment, the UE randomly selects a CD signature from the CD signature set and also selects one CD access slot sub-channel from the CD sub-channel group supported in the cell and transmits a CD Preamble at the same power as the last AP, then waits for a CD/CA-ICH and the channel assignment (CA) (in case CA is active) message from the Node B. The slot selection procedure is as follows:
   a) The next available slot when the PRACH and PCPCH scrambling code are not shared. Furthermore, the PCPCH AP preamble scrambling code and CD Preamble scrambling codes are different.
   b) When the PRACH and PCPCH AP preamble scrambling code and CD preamble scrambling code are shared, the UE randomly selects one of the available access slots in the next 12 access slots. Number of CD sub-channels will be greater than 2.
10) If the UE does not receive a CD/CA-ICH in the designated slot, the UE aborts the access attempt and sends a failure message to the MAC layer.
11) If the UE receives a CD/CA-ICH in the designated slot with a signature that does not match the signature used in the CD Preamble, the UE aborts the access attempt and sends a failure message to the MAC layer.
12a) (In case CA is not Active) If the UE receives a CDI from the CD/CA-ICH with a matching signature, the UE transmits the power control preamble τ _{cd-p-pc-p} ms later as measured from initiation of the CD Preamble. The initial transmission power of the power control preamble shall be ΔPₚ₋ₘ [dB] higher than the power of the CD preamble. The inner loop power control in the power control preamble is described in sub clause 5.1.3.3. The transmission of the message portion of the burst starts immediately after the power control preamble. Power control in the message part is described in sub clause 5.1.3.2.
12b) (In case CA is active) If the UE receives a CDI from the CD/CA-ICH with a matching signature and CA message that points out to one of the PCPCH's (mapping rule is in [5]) that were indicated to be free by the last received CSICH broadcast, the UE transmits the power control preamble τ _{cd-p-pc-p} ms later as measured from initiation of the CD Preamble. The initial transmission power of the power control preamble shall be ΔPₚ₋ₘ [dB] higher than the power of the CD preamble. The inner loop power control in the power control preamble is described in sub clause 5.1.3.3. The transmission of the message portion of the burst starts immediately after the power control preamble. Power control in the message part is described in sub clause 5.1.3.2. If the CA message received points out the channel that was indicated to be busy on the last status information transmission received on the CSICH, the UE shall abort the access attempt and send a failure message to the MAC layer.
   - NOTE:: If the L_{pc-preamble} parameter indicates a zero length preamble, then there is no power control preamble and the message portion of the burst starts τ _{cd-p-pc-p} ms after the initiation of the CD Preamble. In this case the initial transmission power of the control part of the message part shall be ΔPₚ₋ₘ [dB] higher than the power of the CD preamble. Power control in the message part is described in sub clause 5.1.3.2
13) The UE shall test the value of Start of Message Indicator received from DL-DPCCH for CPCH during the first N_{Start_Message} frames after Power Control preamble. Start of Message Indicator is a known sequence repeated on a frame by frame basis. The value of N_{Start_Message} shall be provided by the higher layers.
14) If the UE does not detect Start of Message Indicator in the first N_{Start_Message} frames of DL-DPCCH for CPCH after Power Control preamble, the UE aborts the access attempt and sends a failure message to the MAC layer. Otherwise, UE continuously transmits the packet data.
15) During CPCH Packet Data transmission, the UE and UTRAN perform inner-loop power control on both the CPCH UL and the DPCCH DL, as described in sub clause 5.1.3.
16) After the first N_{Start_Message} frames after Power Control preamble, upon the detection of an Emergency Stop command sent by UTRAN, the UE halts CPCH UL transmission, aborts the access attempt and sends a failure message to the MAC layer.
17) If the UE detects loss of DPCCH DL during transmission of the power control preamble or the packet data, the UE halts CPCH UL transmission, aborts the access attempt and sends a failure message to the MAC layer.
18) The UE may send empty frames after the end of the packet to indicate the end of transmission. The number of the empty frames is set by higher layers.

The purpose of the present invention is to optimise this procedure, in case the power capability of the UE are exceeded.

It should be noted, that in reality the power with which the UE can transmit any signal is both limited with a maximum power which the UE cannot exceed and a minimum power, which the UE cannot go below. In both cases it could theoretically be possible to transmit with more/less power but then there would be the risk that the transmission quality (e.g. phase accuracy, modulation accuracy, leakage to other channels or other parameters) are compromised. In that case it is still not desirable to exceed the limits. The maximum power can also be limited on a cell by cell basis, in order to make sure that no excessive interference is generated in this cell or in surrounding cells.

This fact should also be taken into account for the RACH preamble ramping scheme. Obviously all transmission must be done within the power capabilities of the UE. However, there are various possibilities how to specifically implement this. The purpose of this invention is to identify a procedure which shows optimal performance not only from the point of view of an individual UE but also form the point of view of the network.

If the initial transmission would fall below the UE capabilities, it will be necessary to transmit with the minimum power instead. However, the next transmission should not be done with the power increment added to the minimum transmission, but with the power increment added to the initial nominal transmission power determined by the open loop power control. If this power increment plus initial nominal transmission power determined by the open loop power control is still below the minimum transmission power of the UE, then again the latter must be used.

The effect of this procedure is that multiple transmissions with the UE minimum power are transmitted, depending on how far the initial estimate form open loop power control lies below the UE minimum transmit power. Initially it may look strange that a retransmission (following an unacknowledged transmission) should be transmitted with the same power, because the failure of the first transmission seems to indicate that the initial power was inadequate. However, as the open loop power control initially indicated a low transmission power, this points at a good chance at that power and this fact has to be taken into account. There are also other failure mechanisms that may prevent successful acknowledgement of the initial transmission, e.g. a collision on air, a sudden increase of interference, a temporarily high attenuation or unfavourable condition in the uplink channel, (a so called fading hole), or a failure of the delivery of the acknowledgement rather than the initial transmission. In all these cases a power increase is not necessary.

So in a first embodiment of the invention the power ramping is not started from the actually used transmission power of the previous transmission but from the power which would have been used for the previous transmission in case no constraint regarding a minimum UE transmission power had existed and then possibly this constraint is taken into account, after calculating the ideal next transmission power.

In an other preferred embodiment, transmission attempts at the same power are only performed for a given maximum number of attempts, here called Nmin, afterwards a power increment is performed based on the last used power. This is equivalent to set the initial ideal power here called Pmin to a value which is at least the minimum UE power minus Nmin times the power increment, in case the open loop power control would suggest a lower value. Then there will be Nmin transmissions all with minimum UE transmit power, followed by further transmissions at higher powers.

A similar effect exists at the upper UE power, no matter what actually limits this power. Obviously it is not possible to exceed this power so any transmission attempts must be limited to that power. However it may not be reasonable to stop any further attempts once this limit is reached, for the same reasons as detailed above. It will however be reasonable to make additional attempts all at the maximum power.

So in a further embodiment the UE will continue to transmit transmission attempts at the maximum power, typically until a predetermined maximum number of transmission attempts (Nmax) is exceeded.

Again like detailed for the lower power case, it will not be reasonable to transmit too many attempts all at the same power, in this case all at the maximum power. However it will be better to cease transmission once it becomes (more and more) obvious that a connection cannot be initiated. So it may be desirable to limit the number of transmission attempts at the maximum power in the same way as it is desirable to limit the maximum number of transmission attempts at minimum power. In other words, the number of transmissions at maximum UE power can be limited to a predetermined number, here called Nmax. Again the same effect can be realised by limiting the power with which the transmission would be sent in case the constraint of maximum UE power had not been taken into account to a predetermined quantity, her called Pmax.

So in a further preferred embodiment of the invention the transmission is stopped if more than a predetermined number of transmission attempts have been performed.

In an other preferred embodiment of the invention the transmission is stopped if the nominal power (i.e. power with which the transmission would be sent in case the constraint of maximum UE power had not been taken into account) is limited by a predetermined value (Pmax) and the transmission is stopped if this value would be exceeded.

Generally speaking both ways of formulating the behaviour are equivalent, but there are subtle differences: There may be multiple possibilities for the size of the power increment. Then the number of transmissions at an extreme power will depend on the power increment as well as the predetermined value of Pmax or Pmin. This is a desirable behaviour, because small power increments are typically selected in scenarios where re-transmissions at a similar power level make sense, so also re-transmissions at the same power level will be reasonable. Such scenarios may be environments where there is a high likelihood of collisions.

It should be noted that the power of any further transmission after this initial transmission (once it is acknowledged) could not be based on the open loop estimate but on the power of the last acknowledged transmission. Because the latter has obviously been received successfully by the base station, it generally provides a better power estimate than the open loop estimate. This is also true if the transmission power was limited by the above mentioned procedures.

There is still one case to be taken into account: There may be cases, where the initial transmission may succeed at a particular power level, but an intended subsequent transmission would only be useful at a significantly higher or lower power level, due to the particular properties of this further transmission. For example a high data rate transmission can only be done using a comparatively high transmission power as compared to the RACH transmission. If this fact is known a priori, it may be desirable to limit the RACH transmission power to a maximum value which takes this into account.

For example, if the high data rate communication needs 10 dB more power than the initial RACH transmission (typically the RACH preamble transmission), then it may be useful to limit the initial transmission to a limit of 10 dB below the UE maximum power to allow enough headroom for the subsequent high data rate transmission (alternative a different value than 10 dB may be utilised).

As will be appreciated by those versed in the art, the above presented principles can be modified and combined with each other or with other procedures known for the initialisation of a communication. All those variations are intended to be covered by this invention.

An example of how this invention can be implemented in the above mentioned specification is given below, the text presented hereunder is intended to replace step 6 and 7 of the RACH procedure in chapter 6.1.1 in TS25.14. Note that similar changes can also be applied to the PCICH procedure i.e. chapter 6.2.
6 Transmit a preamble using the selected uplink access slot, signature, and preamble transmission power. In the case that the preamble transmission power would exceed the maximum allowed value, the UE shall transmit with the maximum allowed power. In the case that the preamble transmission power would be below the minimum level required in [7], then the UE shall transmit with a power which is between preamble transmission power and the required minimum power specified in [7].
7 If no positive or negative acquisition indicator (AI ≠ +1 nor -1) corresponding to the selected signature is detected in the downlink access slot corresponding to the selected uplink access slot:
   7.1 Select the next available access slot in the RACH sub-channel group chosen in 1.
   7.2 Randomly selects a new signature from the available signatures within the given ASC. The random function shall be such that each of the allowed selections is chosen with equal probability.
   7.3 Increase the preamble transmission power by ΔP₀ = Power_Ramp_Step [dB]. If the preamble transmission power exceeds the maximum UE transmitter power by 6dB, the UE may pass L1 status ("No ack on AICH") to the higher layers (MAC) and exit the physical random access procedure.
   7.4 Decrease the Preamble Retransmission Counter by one.
   7.5 If the Preamble Retransmission Counter > 0 then repeat from step 6. Otherwise pass L1 status ("No ack on AICH") to the higher layers (MAC) and exit the physical random access procedure.

[1] TS 25.211: "Physical channels and mapping of transport channels onto
   physical channels (FDD)".
[2] TS 25.212: "Multiplexing and channel coding (FDD)".
[3] TS 25.213: "Spreading and modulation (FDD)".
[4] TS 25.215: "Physical layer - Measurements (FDD)".
[5] TS 25.331: "RRC Protocol Specification".
[6] TS 25.433: "UTRAN Iub Interface NBAP Signalling".
[7] TS 25.101: "UE Radio transmission and Reception (FDD)".
[8] TS 25.133: "Requirements for Support of Radio Resource Management
   (FDD)".
[9] TS 25.321: " MAC protocol specification".

## Claims

1. Method for the inititation of communication,
whereby the communication is initiated by an initial transmission,
whereby a successful initial transmission is acknowledged, whereby the transmission is repeated (retransmitted) in case of a missing acknowledgement, whereby a power increment is applied for re-transmissions,
whereby the number of retransmissions is limited to a predetermined number at the power extremes.

2. Method as claimed in Claim 1,
whereby the power ramping is not started from the actually used transmission power of the previous transmission but from the power which would have been used for the previous transmission in case no constraint regarding a minimum UE transmission power had existed and then this constraint is taken into account, after calculating the ideal next transmission power.

3. Method as claimed in any preceding Claim,
whereby transmission attempts at the same power are only performed for a given maximum number of attempts (Nmin), afterwards a power increment is performed based on the last used power.

4. Method as claimed in claims 1 or 2,
whereby the initial ideal power is limited to a predetermined value (Pmin), in case the open loop power control would suggest a lower value.

5. Method as claimed in claim 1,
whereby at most a predetermined maximum number of transmission attempts (Nmax) is performed at the maximum power.

6. Method as claimed in claim 1 or 5,
whereby the power with which the transmission would be sent in case the constraint of maximum UE power had not been taken into account is limited to a predetermined quantity (Pmax).

7. Method as claimed in claim 1, 5 or 6
whereby the transmission is stopped if more than a predetermined number of transmission attempts have been performed at the maximum power.

8. Method as claimed in any of the preceding claims, whereby the power requirement of a subsequent transmission is taken into account to limit the number or power of the initial transmission attempts.

9. Apparatus for the initiation of communication, said apparatus comprising means for initiating the connection as claimed in any of the preceding claims.
